# EUROPÄISCHE PATENTSCHRIFT

(11) **EP 1 583 605 B1**
(45) Veröffentlichungstag und Bekanntmachung des Hinweises auf die Patenterteilung: **30.09.2009**
(21) Anmeldenummer: 03813076.1
(22) Anmeldetag: 11.12.2003
(51) Int. Cl.: B01J 8/20, B01J 8/44, C02F 1/00

(54) **FILTER UND VERFAHREN ZUR RÜCKSPÜLUNG DES FILTERS**
FILTER AND PROCESS FOR BACKWASHING THE FILTER
FILTRE ET PROCÉDÉ DE LAVAGE À CONTRE-COURANT DU FILTRE

(30) Priorität: 13.12.2002 DE 10258414; 28.01.2003 DE 10303142; 07.02.2003 DE 10305019
(43) Veröffentlichungstag der Anmeldung: 12.10.2005
(73) Patentinhaber: Becke, Christian, 48565 Steinfurt (DE)
(72) Erfinder: Becke, Christian, 48565 Steinfurt (DE)
(74) Vertreter: Habbel, Ludwig
(86) Internationale Anmeldenummer: PCT/DE2003/004088
(87) Internationale Veröffentlichungsnummer: WO 2004/054701

(56) Entgegenhaltungen:
- EP-A- 0 088 638
- WO-A-00/76655
- WO-A-02/11878
- DE-B- 1 208 736
- US-A- 4 869 815
- US-B1- 6 331 283

## Beschreibung

Die Erfindung betrifft einen Filter zur Wasseraufbereitung sowie ein Verfahren zur Rückspülung eines Filters, wobei dieses verfahren insbesondere zur Rückspülung eines zur Wasseraufbereitung dienenden Filters verwendet werden kann.

Aus der WO 02/11878 A1, aus der US 6 331 283 B1, oder aus der DE - AS - 1 208 736 sind Wirbelbett-Reaktoren bekannt, bei denen ein aus Einzelkörpern bestehendes Medium in der Wirbelkammer von unten nach oben von einem Gas durchströmt wird, und bei denen das im Behälter vorhandene Medium als Reaktionsmedium bzw. als Katalysator dient. Die Erzeugung eines Wirbelbettes stellt dabei den normalen Betriebszustand des Reaktors dar. Auch die EP 0 088 638 A2 betrift einen Wirbelbett-Reaktor, wobei mittels eines Gasverteilungssystems Gas als Fluid in den Behälter eingespeist wird.

Aus der US 4 869 815 ist ein Wirbelbett-Reaktor bekannt, der einen unteren Raum aufweist, welcher nicht frei von Reaktionskörpern ist, nicht frei vom Fluid durchströmt werden kann und nicht von dem Bereich getrennt ist, in welchem sich die schüttfähigen Einzelkörper (bei der US 4 869 815: Reaktionskörper/bei der vorliegenden Erfindung: Filtermedium) befinden. Bei Verwendung als Wasserfilter würde bei diesem bekannten Wirbelbett-Reaktor nachteilig sein, dass in diesem unteren Raum bei einer Rückspülung des Filters keine Fluidisierung des Filterbettes möglich wäre, da bei der US 4 869 815 die untere Schicht als nicht fluidisierbares Festbett konzipiert ist. Zudem könnten Feststoffe, die sich während eines Filterbetriebs des Behälters in dieser unteren Schicht bzw. in diesem unteren Festbett absetzen, wegen der fehlenden Fluidisierung nicht später während einer Filterrückspülung ausgetragen werden.

Die WO 00/76655 A1 betrifft einen Wirbelbettreaktor, der mit körnigem Material gefüllt ist und der ebenso wie der Wirbelbettreaktor gemäß der vorgenannten der US 4 869 815 keinen Trennboden aufweist, welcher einen von festen Körpern freien Polsterraum von dem darüber befindlichen Raum des Behälters trennt. Bei Verwendung als Wasserfilter würde bei diesem bekannten Wirbelbett-Reaktor nach der WO 00/76655 A1 nachteilig sein, dass bei der normalen Durchströmungsrichtung einer Filtration, welche der Rückspülungs-Strömungsrichtung entgegengerichtet ist und demzufolge von oben nach unten verläuft, das Filtermaterial durch einen vorgesehenen Zulauf-Spalt nach außen ausgetragen und aus dem Behälter herausgespült werden.

Bei aus der Praxis bekannten Filtern erfolgt die Zuströmung des Fluids zentral in der unteren Wandung des Polsterraums, so dass eine vertikal nach oben gerichtete Fluidströmung gegen einen Trennboden prallt, der den Polsterraum von der Wirbelkammer trennt. Zur Vergleichmäßigung dieser zentralen Hauptströmung über den gesamten Querschnitt der Filterkammer ist häufig eine zusätzliche sogenannte Stützschicht oberhalb des Trennbodens zwischen Polsterraum und Wirbelkammer vorgesehen, die beispielsweise mit grobkörnigem Material gefüllt ist, welches die Vergleichmäßigung der Strömung bewirkt.

Insgesamt ergibt sich so ein erheblicher Strömungswiderstand für das Fluid, bevor dieses in die Wirbelkammer gelangt. Zur Überwindung dieses Strömungswiderstandes muss das Fluid mit einer entsprechenden Energie beaufschlagt werden, beispielsweise in Form installierter Pumpenleistung, um im Wirbelraum noch die gewünschte Verwirbelung des Mediums sicherstellen zu können. Beispielsweise im Bereich der Trinkwasseraufbereitung, wo eine Rückspülung des Filtermediums nach dem Wirbelbettverfahren erfolgt, muss mit einem erheblichen konstruktiven Aufwand die Einbringung der erforderlichen Energie in das Rückspül-Wasser sichergestellt werden.

Der Erfindung liegt die Aufgabe zugrunde, einen Filter zu schaffen, bei dem das Filtermedium mittels einer wiederstandsarmen und möglichst gleichmäßigen Verteilung des Fluids und einer dementsprechend möglichst gleichmäßige Ausgestaltung eines Wirbelbettes gereinigt werden kann.

Diese Aufgabe wird durch einen Filter mit den Merkmalen des Anspruchs 1 und ein Verfahren mit den Verfahrensschritten des Anspruchs 9 gelöst. Eine besonders vorteilhafte Anwendung derartiger Filter ergibt sich bei einem Verfahren nach Anspruch 10.

Die Erfindung schlägt mit anderen Worten vor, zur Ausbildung des Wirbelbettes in einem Filter das Fluid als eine zirkuläre, aufwärts gerichtete Strömung strömen zu lassen, die sich gleichmäßig unter einem Trennboden verteilt, welcher den Polsterraum von der darüber befindlichen Filter- bzw. Wirbelkammer trennt. Durch die zirkuläre Strömung wird eine so gute Verteilung des Fluids im Polsterraum bewirkt, dass zusätzliche Schichten erübrigt werden können, die aus der Praxis bekannt sind, beispielsweise in der Form von sogenannten Stützschichten aus Granulat grober Körnung, und die zwischen Polsterraum und Wirbelkammer einer Vergleichmäßigung der aufsteigenden Strömung dienen sollen.

Zur Erzielung der zirkulären, aufwärts gerichteten Strömung schließt der Zulauf außermittig an den Polsterraum an, indem der Zulauf als Leitungsabschnitt ausgestaltet ist, beispielsweise als Rohrstutzen, und etwa tangential augerichtet ist, so dass durch die Formgebung und Ausrichtung dieses Leitungsabschnittes bereits eine Ausrichtung der Strömung vorgegeben ist. Hierdurch wird eine zirkuläre Strömung auch ohne strömungshindernde Einbauelemente begünstigt.

Vorschlagsgemäß weist der den Polsterraum nach oben begrenzende Trennboden Durchtrittsöffnungen auf, die etwa kreisförmig angeordnet und jeweils "etwa tangential" - also wiederum eher tangential als radial - ausgerichtet sind. Auf diese Weise ergibt sich ein geringer Druckverlust an diesem Trennboden und zur Fluidisierung des Wirbelbettes ist eine vergleichsweise geringere Fluidgeschwindigkeit erforderlich, wodurch sich wiederum der Verbrauch an Fluidmenge verringert. Bei einer Filterrückspülung nach dem Schwerkraftprinzip, wobei das Fluid aus einem Vorratsbehälter strömt, kann daher das Fassungsvermögen des Vorratsbehälters vorteilhaft klein bemessen werden.

Vorzugsweise kann die seitliche Einleitung des Fluids die Ausbildung einer zirkulären Strömung dadurch begünstigen, dass der Zulauf etwa tangential an den Polsterraum anschließt. Mit "etwa tangential" ist dabei gemeint, dass die Strömung nicht mit mathematischer Exaktheit genau tangential einströmen muss, sondern dass sie durch die Ausgestaltung des Zulaufs nicht radial auf die Mitte des Polsterraumes ausgerichtet wird, was störende Verwirbelungen bewirken würde, sondern vielmehr zur Erzielung einer zirkulären Strömung mehr tangential als radial einströmt; beispielsweise kann die Strömung auch gebogen, mit einem Drall verlaufen, indem sie durch eine gebogen verlaufende Zuleitung zugeführt wird.

Weiterhin kann vorteilhaft vorgesehen sein, die sich ausbildende, aufwärts gerichtete Strömung dadurch zu unterstützen, dass der Zulauf beispielsweise in Form eines Stutzens ebenfalls aufwärts ausgerichtet ist.

Vorteilhaft kann oberhalb des Zulaufs eine Strömungsbegrenzung für das aufsteigende Fluid vorgesehen sein, so dass das zuströmende Fluid nicht seitlich erheblich höher steigt als in der Mitte des Polsterraums. So wird eine gleichmäßige Verteilung des Fluids und damit eine gleichmäßige Ausbildung des Wirbelbettes begünstigt. Daher kann oberhalb des Zulaufs vorteilhaft die Wandung des Polsterraums nach innen ragen.

Dies kann beispielsweise durch eine in die Wandung eingeformte Sicke erfolgen, oder durch ein Strömungsleitblech, welches beispielsweise mit der übrigen Wandung verschweißt ist und somit ein nach innen ragendes Teil der Wandung darstellt, oder es kann ein sich nach oben verringernder Querschnitt des Polsterraums vorgesehen sein, beispielsweise durch einen kegelstumpfförmigen Polsterraum, der sich nach oben verjüngt. Die Wandungen des Polsterraums können dabei geradlinig, konvex oder konkav gebogen verlaufen, wobei ein derartiger Verlauf in Anpassung an das zu verwendende Fluid und die übrigen Betriebsbedingungen des Behälters auszuwählen ist.

Die Ausbildung eines möglichst gleichmäßig verteilten Wirbelbettes wird durch einen derartig ausgestalteten Trennboden begünstigt, so dass auf die vorerwähnte Stützschicht oder auf andere Hilfseinbauten zur Verteilung des Fluids in vielen Fällen verzichtet werden kann. Hierdurch wird die erforderliche Bauhöhe des Behälters geringer. Bei der vorerwähnten Filterrückspülung nach dem Schwerkraftprinzip kann daher die Bauhöhe des Vorratsbehälters reduziert werden. Zusammen mit dem vergleichsweise kleinen Behältervolumen ergeben sich daher vorteilhaft reduzierte Anforderungen an die Statik eines derartigen Vorratsbehälters, so dass dieser preisgünstig erstellt werden kann.

Die länglichen Durchtrittsöffnungen im Trennboden können vorteilhaft als längliche Schlitze ausgestaltet sein, die beispielsweise per Lasertechnik aus einer Platte ausgetrennt werden, so dass eine schnelle, präzise und nachbearbeitungsfreie Herstellung des Trennbodens möglich ist.

Alternativ kann der Trennboden aus einer Vielzahl konzentrischer Ringe bestehen, die jeweils einen Spalt zwischen sich aufweisen, sodass diese Spalte ringförmige Durchtrittsöffnungen ergeben, welche den widerstandsarmen Durchtritt der zirkulären, nach oben aufsteigenden Strömung ermöglichen. Die Ausgestaltung der einzelnen Ringe bietet gegenüber einem kompletten Trennboden den Vorteil eines jeweils vergleichsweise geringen einzeln zu handhabenden Gewichtes, beispielsweise bei Großbehältern mit entsprechend großen Durchmessern der Trennböden von mehreren Metern. Die größeren Ringe können dabei in einzelne Abschnitte segmentiert sein, zugunsten der besseren Handhabbarkeit. Alternativ kann vorgesehen sein, den Trennboden tortenstückartig, also radial, zu segmentieren, um auf diese Weise einzeln handhabbare Teile vergleichsweise geringen Gewichtes zu erhalten. Die Trennböden insbesondere größerer Abmessungen können beispielsweise aus Metall oder Kunststoff sein, jedoch auch aus mineralischen Werkstoffen wie beispielsweise Beton.

Bei runden Behälter-Querschnitten sind vorteilhaft die Durchtrittsöffnungen etwa kreisrund angeordnet, beispielsweise entlang konzentrischer Kreise, wobei eine geringe Abweichung vom exakten kreisrunden Verlauf der Durchtrittsöffnungen möglich ist, beispielsweise durch eine spiralförmige oder eine ovale Anordnung der Durchtrittsöffnungen. Auch die Ausrichtung der länglichen Durchtrittsöffnungen muss nicht exakt dem Kreisverlauf folgen, sondern es können jeweils geradlinige Durchtrittsöffnungen vorgesehen sein, die vorteilhaft jeweils "etwa tangential" ausgerichtet sind. Im Gegensatz zu radial strahlenförmig ausgerichteten Durchtrittsöffnungen oder im Gegensatz zu punktuell verteilten, etwa in Form eines quadratischen Rasters verteilten Durchtrittsöffnungen wird der vorteilhaft geringe Strömungswiderstand durch die vorgeschlagene Anordnung und Ausrichtung der Durchtrittsöffnungen erzielt.

Während Wirbelbett-Reaktoren allgemein in der Verfahrenstechnik angewendet werden können, ist insbesondere vorteilhaft die Ausgestaltung eines Filters in Form eines Kornmassenfilters mittels eines vorgeschlagenen Behälters möglich. Dabei kann insbesondere bei der Trinkwasseraufbereitung ein derartiger Filter verwendet werden. Während der Filtrations-Betriebsweise wird der Filter beispielsweise von oben nach unten durchströmt, wobei das Filtermedium, beispielsweise Quarzsand, Kohlenstoffgranulat oder dergleichen, in der Wirbelkammer angeordnet ist. Unterhalb der Wirbelkammer dient der Polsterraum als Filtrat-Sammelraum.

In bestimmten Abständen wird das Filtermedium im Rahmen einer Filterrückspülung gereinigt. Hierbei wird der Filter von unten nach oben durchströmt, so dass Fluid in den Polsterraum einströmt und von dort in die Wirbelkammer aufsteigt. Aus dem Filtrations-Festbett wird nun ein Rückspülungs-Wirbelbett, wobei die Verwirbelung des Filtermediums zu einer mechanischen Reinigung der einzelnen Körner des Filtermediums führt.

Rein beispielhaft wird nachfolgend davon ausgegangen, dass vorzugsweise zuvor aufbereitetes Wasser als Rückspülungs-Fluid für den Trinkwasser-Filter verwendet wird. Das hierzu in den Polsterraum einzuleitende Wasser muss mit einem ausreichenden Druck in den Filter eingebracht werden, um die gewünschte Fluidisierung des zunächst als Festbett vorliegenden Filtermediums zu ermöglichen. Dieser gewünschte Druck kann beispielsweise durch eine Pumpe aufgebracht werden, die allerdings eine kurzfristige und sehr hohe Energieaufnahme, beispielsweise in Form von elektrischer Energie, aufweist.

Alternativ kann daher vorteilhaft vorgesehen sein, die Rückspülung schwerkraftunterstützt durchzuführen. In diesem Fall kann mit einer erheblich geringeren Leistung, über einen längeren Zeitraum verteilt, Wasser in einen erhöht angeordneten Vorratsbehälter gefördert werden, wobei während des Rückspülvorgangs dieses Wasser aufgrund des Höhenunterschiedes zum Filtermedium in kurzer Zeit und mit dem erforderlichen Druck in den Filter einströmt. Durch die widerstandsarme Ausgestaltung des Behälters im Bereich des Polsterraumes steigt das Wasser mit hohem Energiegehalt in die Wirbelkammer auf, welche dort die gewünschte Verwirbelung des Filtermediums ermöglicht. Durch die widerstandsarme Ausgestaltung des Behälters im Bereich des Polsterraumes ist dies auch bei einer vergleichsweise geringeren Bauhöhe und bei einem vergleichsweise kleineren Volumen des Vorratsbehälters möglich, so dass dieser Vorratsbehälter mit erheblich verringertem Aufwand und insbesondere mit erheblich verringerten statischen Anforderungen erstellt werden kann.

Insbesondere wenn als Filtermedium ein Medium mit möglichst geringem spezifischen Gewicht verwendet wird, beispielsweise anstelle von Quarzsand Matrialien wie Lava- oder Bimsgestein, Blähtongranulat oder Anthrazit, wird eine schnelle Fluidisierung des Filterbettes ermöglicht, so dass vergleichsweise weniger Energie in das Filtermedium eingebracht werden muss und dementsprechend die erforderliche Mindestbauhöhe des Vorratsbehälters für die Rückspülung weiter verringert werden kann. Zudem sinkt die zur wirksamen Rückspülung erforderliche Spülgeschwindigkeit, so dass eine geringere Wassermenge erforderlich ist und somit das Volumen des Vorratsbehälters vergleichsweise gering bemessen sein kann.

Die Verwendung kohlenstoffahltiger Filtermedien, wie z. B. des erwähnten Anthrazits, kann insbesonderebei Anwendung des Filters im Trinkwasser- oder Lebensmittelbereich zusätzlich zu den Vorteilen des geringen spezifischen Gewichts hygienische Vorteile ermöglichen.

Gemäß dem vorliegenden Vorschlag wird ein Verfahren zur Erzeugung des Wirbelbettes bevorzugt, bei welchem das Fluid in Form einer zirkulären, aufwärts gerichteten Strömung in das Medium geführt wird. Dieses Verfahren kann besonders vorteilhaft zur Rückspülung eines Filters genutzt werden, beispielsweise wie anhand der vorstehenden Beispiele erläutert, bei einem Filter, welcher zur Wasseraufbereitung dient.

Ausführungsbeispiele der Erfindung werden anhand der rein schematischen Zeichnungen nachfolgend näher erläutert. Dabei zeigt
- Fig. 1: eine Seitenansicht auf den Bereich des Polsterraums eines Behälters,
- Fig. 2: eine Draufsicht auf das Behälterteil von Fig. 1, wobei einige Einzelheiten weggelassen sind,
- Fig. 3: eine Ansicht ähnlich Fig. 2 für ein zweites Ausführungsbeispiel,
- Fig. 4: eine Ansicht ähnlich Fig. 1 für ein weiteres Ausführungsbeispiel,
- Fig. 5: eine Draufsicht auf einen ersten Trennboden, welche den Polsterraum nach oben begrenzt, und
- Fig. 6: eine Ansicht ähnlich Fig. 5 als eine Draufsicht auf einen zweiten Trennboden.

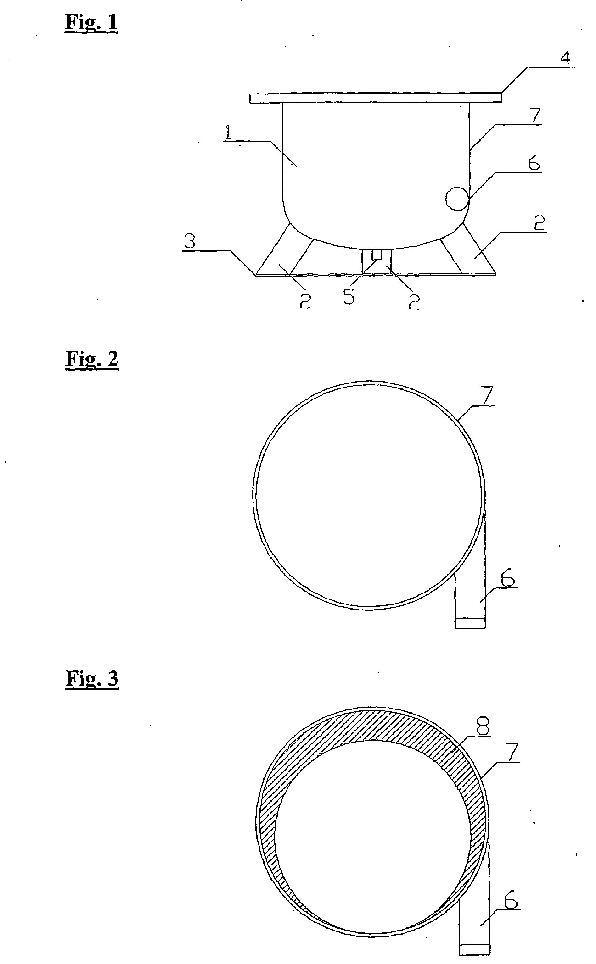

In Fig. 1 ist mit 1 insgesamt ein Behälterunterteil bezeichnet, welches den unteren Abschnitt eines insgesamt erheblich höheren Behälters bildet. Ein derartiger Behälter kann beispielsweise als Wirbelbett-Reaktor oder als Trinkwasserfilter ausgestaltet sein, wobei das Behälterunterteil 1 den Polsterraum umschließt, welcher unterhalb der Wirbelkammer bzw. Filterkammer eines derartigen Behälters angeordnet ist. Diese Wirbelkammer kann als Zylinder ausgebildet sein, so dass dementsprechend das Behälterunterteil 1 einen ebenfalls kreisrunden Querschnitt aufweist. Es steht mittels Standfüßen 2 auf einer Bodenplatte 3 auf und weist an seinem oberen Ende einen Flansch 4 auf, zum Anschluss an das die Wirbelkammer aufnehmende Bauteil, sowie weiterhin einen Auslassstutzen 5, durch welchen der gesamte Behälter entleert werden kann.

Das Behälterunterteil 1 weist weiterhin einen Zulauf 6 in Form eines Rohrstutzens auf, welcher seitlich an eine Wandung 7 des Behälterunterteils 1 anschließt. Wie insbesondere aus Fig. 2 ersichtlich ist, schließt der Zulauf 6 tangential an die Wandung 7 an, welche einen kreisrunden Querschnitt aufweist und den Polsterraum des Behälters umgibt.

Während in Fig. 2 angedeutet ist, dass innerhalb der Wandung 7 der Polsterraum einen freien Querschnitt aufweist, zeigt Fig. 3 ein Strömungsleitblech 8, welches mondsichelartig ausgestaltet ist und mit der übrigen Wandung 7 verschweißt ist, so dass es einen nach innen ragenden Teil dieser Wandung bildet. Das Strömungsleitblech 8 ist oberhalb des Zulaufs 6 angeordnet, so dass die in den Polsterraum einströmende Fluidmenge nicht innen an der Wandung 7 aufsteigt.

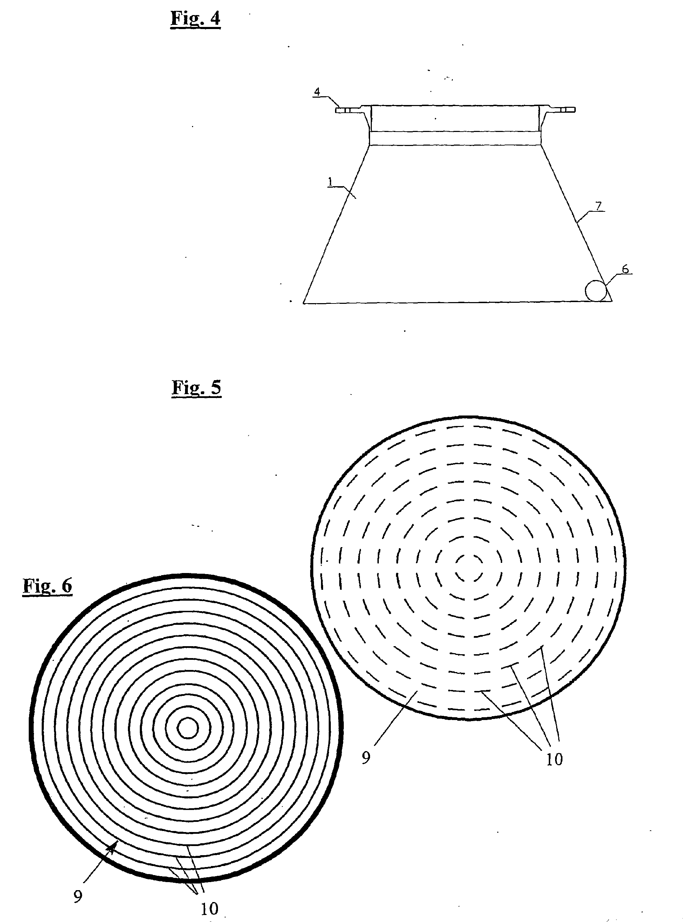

Fig. 4 zeigt als Alternative zu Fig. 3, allerdings in einer Darstellung ähnlich Fig. 1, dass eine derartige Führung des einströmenden Fluids auch durch einen sich nach oben verringernden Querschnitt des Polsterraumes bewirkt werden kann: Die Wandung 7 bei diesem Ausführungsbeispiel verläuft kegelstumpfförmig und verhindert dadurch, dass die ähnlich wie in den Fig. 1 und 2 tangential in den Polsterraum einströmende Fluidmenge radial außen höher ansteigt als im mittleren Bereich des Polsterraumes.

Ein widerstandsarmer Durchtritt der zirkulär strömenden Fluidmenge wird durch einen in Fig. 5 dargestellten Trennboden 9 ermöglicht, welcher die Wirbelkammer bzw. den Filterraum nach unten begrenzt und vom Polsterraum trennt. Bei diesem Trennboden 9 ist eine Vielzahl von länglichen Durchtrittsöffnungen 10 vorgesehen, die als Schlitze ausgestaltet sind und konzentrisch um den Mittelpunkt des Trennbodens angeordnet sind. Die Durchtrittsöffnungen 10 sind gebogen ausgestaltet, so dass sie nicht nur konzentrisch angeordnet sind, sondern auch einen konzentrisch gebogenen Verlauf aufweisen. Dies stellt im Sinne des vorliegenden Vorschlags eine "etwa tangentiale" Ausrichtung und Anordnung dieser Durchtrittsöffnungen 10 dar, durch welche ein widerstandsarmer Durchtritt des Fluids aus dem Polsterraum in die Wirbel- bzw. Filterkammer ermöglicht wird.

Einen zur Fig. 5 alternativ ausgestalteten Trennboden 9 zeigt Fig. 6. Hier ist keine geschlossene Platte als Trennboden 9 vorgesehen, sondern der Trennboden 9 besteht gemäß Fig. 6 vielmehr aus einzelnen konzentrisch angeordneten Ringen, wobei die sich zwischen den Ringen ergebende Spalte die Durchtrittsöffnungen 10 bilden. Die einzelnen Ringe können miteinander verbunden sein, oder lediglich Abstandshalter zueinander aufweisen und auf einem im Behälter vorgesehenen Traggerüst aufliegen. Aus Fig. 6 nicht ersichtlich ist die Aufteilung der Ringe in mehrere Segmente. Dabei kann die Grenzlinie der einzelnen Segmente radial verlaufen, sodass sich tortenstückartige Segmente ergeben. Es kann jedoch auch vorgesehen sein, die einzelnen Ringe kleineren Durchmessers komplett auszugestalten und lediglich die Ringe mit größerem Durchmesser, die dementsprechend schwerer sind, in einzelne kreisbogenförmige Segmente aufzuteilen, um diese Segmente leichter transportieren und handhaben zu können als den gesamten jeweiligen Ring. Der vorteilhaft geringe Widerstand um die zirkuläre aufwärts gerichtete Strömung durch den Trennboden 9 hindurch treten zu lassen, weist auch der Trennboden 9 gemäß Fig. 6 auf.

## Patentansprüche

1. Filter zur Wasseraufbereitung,
mit einem Filtergehäuse, welches als Behälter zur Aufnahme eines Wirbelbettes wie folgt ausgestaltet ist:
• mit einer Wirbelkammer, welche als Filterraum ein aus einer Vielzahl schüttfähiger Einzelkörper bestehendes Filtermedium enthält,
• mit einem unterhalb der Wirbelkammer angeordneten Polsterraum,
• mit einem außermittig an den Polsterraum anschließenden Zulauf (6) für ein das Filtermedium verwirbelndes Fluid,
• wobei der Zulauf (6) als Leitungsabschnitt ausgestaltet und etwa tangential ausgerichtet ist,
• derart, dass der Zulauf (6) das Fluid eine zirkuläre, aufwärts gerichtete Strömung erzeugend in den Polsterraum führt,
und mit einem zwischen der Wirbelkammer und dem Polsterraum vorgesehenen Trennboden (9),
wobei der Trennnboden (9) Durchtrittsöffnungen (10) aufweist,
• die entweder etwa kreisförmig angeordnet und länglich sind, wobei deren Längsachsen jeweils etwa tangential ausgerichtet sind,
• oder die im wesentlichen konzentrisch zum Mittelpunkt des Trennbodens (9) verlaufen,
wobei der Filter in einer ersten "Filtrations"-Betriebsweise betreibbar ist, in welcher das Filtermedium als Festbett vorliegt,
sowie in einer zweiten "Rückspülungs"-Betriebsweise, in welcher das Filtermedium als Wirbelbett durchströmt wird.

2. Filter nach Anspruch 1, **dadurch gekennzeichnet, dass** der Zulauf (6) aufwärts gerichtet ist.

3. Filter nach Anspruch 1 oder 2, **dadurch gekennzeichnet, dass** oberhalb des Zulaufs (6) die Wandung des Polsterraumes nach innen ragt.

4. Filter nach Anspruch 3, **gekennzeichnet durch** ein nach innen ragendes Strömungsleitblech (8).

5. Filter nach Anspruch 3, **gekennzeichnet durch** einen sich oberhalb des Zulaufs (6) nach oben verringernden Querschnitt des Polsterraums.

6. Filter nach Anspruch 5, **gekennzeichnet durch** einen kegelstumpfförmigen Polsterraum.

7. Filter nach einem der vorhergehenden Ansprüche, **dadurch gekennzeichnet, dass** der Trennboden (9) aus mehreren Segmenten besteht.

8. Filter nach einem der vorhergehenden Ansprüche, **gekennzeichnet durch** ein Filtermedium mit geringem spezifischem Gewicht, wie Lava- oder Bimsgestein, Blähtongranulat oder kohlenstoffhaltiges Material wie Anthrazit.

9. Verfahren zur Rückspülung eines Filters,
wobei der Filter eine Wirbelkammer, unterhalb der Wirbelkammmer einen Polsterraum, und zwischen der Wirbelkammer und dem Polsterraum einen Trennboden (9) aufweist,
und das Filtermedium aus einer Vielzahl schüttfähiger Einzelkörper in der Wirbelkammer besteht,
und wobei zur Erzeugung eines Wirbelbettes ein Fluid durch einen Zulauf (6) außermittig in den Polsterraum und von unten nach oben gerichtet durch das Filtermedium geleitet wird,
derart, daß die Einzelkörper des Mediums verwirbelt werden und das Medium fluidisiert wird,
und wobei das Fluid in Form einer zirkulären, aufwärts gerichteten Strömung in das Medium geführt wird,
wobei das Fluid durch im Trennboden (9) vorgesehene Durchtrittsöffnungen (10) strömt,
die entweder etwa kreisförmig angeordnet und länglich sind, wobei deren Längsachsen jeweils etwa tangential ausgerichtet sind,
oder die im wesentlichen konzentrisch zum Mittelpunkt des Trennbodens (9) verlaufen.

10. Anwendung des Verfahrens von Anspruch 9 zur Rückspülung eines zur Wasseraufbereitung dienenden Filters.

## Claims

1. Filter for water conditioning,
having a filter housing which is constructed as a container to receive a fluid bed as follows:
• having a whirl chamber which, as a filter chamber, contains a filtering medium consisting of a large number of pourable single bodies,
• having a cushion chamber (Polsterraum) disposed underneath the whirl chamber,
• having an inlet (6) for a fluid whirling the filtering medium, which inlet (6) is connected off centre to the cushion chamber,
• where the inlet (6) is constructed as a portion of the pipework and is aligned, approximately, tangentially,
• so that the inlet (6) conducts the fluid into the cushion chamber, setting up a circular, upwardly directed current,
and having a separating element (9) disposed between the whirl chamber and the cushion chamber,
where the separating element (9) incorporates through-holes (10),
• which are disposed, approximately, in a circle and are longish,
where their longitudinal axes are each aligned, approximately, tangentially,
• or which run essentially concentrically to the centre point of the separating element (9),
where the filter can be operated by a first "filtration" operating method, in which the filtering medium is set up as a fixed bed,
and by a second "backwashing" operating method, in which the filtering medium is set up as a fluid bed.

2. Filter in accordance with claim 1, **characterised in that** the inlet (6) is directed upwards.

3. Filter in accordance with claim 1 or 2, **characterised in that** above the inlet (6) the walling of the cushion chamber projects inwards.

4. Filter in accordance with claim 3, **characterised by** a flow guide plate (8) projecting inwards.

5. Filter in accordance with claim 3, **characterised by** a cross-section of the cushion chamber which tapers upwards above the inlet (6).

6. Filter in accordance with claim 5, **characterised by** a cushion chamber shaped like a truncated cone.

7. Filter in accordance with any of the foregoing claims, **characterised in that** the separating element (9) comprises a number of segments.

8. Filter in accordance with any of the foregoing claims, **characterised by** a filtering medium with a low specific weight, such as lava or pumice stone, expanded clay granulate or a material containing carbon, such as anthracite.

9. Process for backwashing a filter,
where the filter incorporates a whirl chamber, a cushion chamber underneath the whirl chamber, and a separating element (9) between the whirl chamber, and the cushion chamber,
and the filtering medium consists of a large number of pourable single bodies in the whirl chamber,
and where to generate a fluid bed a fluid is conducted off centre through the filtering medium through an inlet (6) from the bottom upwards into the cushion chamber
so that the single bodies of the medium are whirled around and the medium is fluidised,
and where the fluid is conducted into the medium in the form of a circular, upwardly directed current,
where the fluid flows through through-holes (10) provided in the separating element (9)
which through-holes (10) are disposed, approximately, in a circle and
are longish, where their longitudinal axes are each aligned, approximately, tangentially,
or which through-holes (10) run essentially concentrically to the centre point of the separating element (9).

10. Use of the process of claim 9 for backwashing a filter used for water conditioning.

## Revendications

1. Filtre de retraitement de l'eau,
comprenant un carter de filtre qui en tant que récipient recevant un lit fluidisé est configuré comme suit :
• avec une chambre de turbulence qui en tant que compartiment filtrant contient un média filtrant composé d'un grand nombre de corps individuels entassables en vrac,
• avec un compartiment amortisseur (Polsterraum) installé en dessous de la chambre de turbulence,
• avec un embout d'arrivée (6) décentré raccordé au compartiment amortisseur, embout par lequel arrive le fluide faisant entrer le média filtrant en turbulence,
• l'embout d'arrivée (6) étant configuré comme segment de conduite et orienté approximativement de façon tangentielle,
• de sorte que l'embout d'arrivée (6) conduit le fluide dans le compartiment amortisseur en générant un flux circulaire de sens montant,
et un fond de séparation (9) prévu entre la chambre de turbulence et le compartiment amortisseur,
le fond de séparation (9) présentant des orifices de passage (10),
• qui soit sont agencés approximativement en cercles et sont de forme oblongue, leur axes longitudinaux étant chaque fois orientés de façon approximativement tangentielle,
• soit présentent un tracé essentiellement concentrique par rapport au centre du fond de séparation (9),
le filtre étant exploitable dans un permier mode dit « de filtration » dans lequel le média filtrant est présent sous forme de lit solide,
ainsi que dans un deuxième mode dit « de lavage à contre-courant » dans lequel le média filtrant est, en tant que lit fluidisé, traversé par un flux.

2. Filtre selon la revendication 1, **caractérisé en ce que** l'embout d'arrivée (6) est dirigé vers le haut.

3. Filtre selon la revendication 1 ou 2, **caractérisé en ce qu'**au dessus de l'embout d'arrivée (6) la paroi du compartiment amortisseur fait saillie vers l'intérieur.

4. Filtre selon la revendication 3, **caractérisé par** une tôle guide-flux (8) faisant saillie vers l'intérieur.

5. Filtre selon la revendication 3, **caractérisé en ce qu'**au dessus de l'embout d'arrivée (6) la section du compartiment amortisseur va en diminuant vers le haut.

6. Filtre selon la revendication 5, **caractérisé en ce que** le compartiment amortisseur est de forme tronconique.

7. Filtre selon l'une des revendications précédentes, **caractérisé en ce que** le fond séparateur (9) se compose de plusieurs segments.

8. Filtre selon l'une des revendications précédentes, **caractérisé en ce que** le média filtrant est un média d'un faible poids spécifique tel que de la pierre de lave ou de la pierre ponce, un granulé d'argile expansée ou un matériau contenant du carbone comme l'anthracite.

9. Procédé de lavage à contre-courant d'un filtre,
sachant que le filtre présente une chambre de turbulence, un compartiment amortisseur en dessous de la chambre de turbulence et un fond séparateur (9) entre la chambre de turbulence et le compartiment amortisseur,
et que le média filtrant se compose d'un grand nombre de corps individuels entassables en vrac dans la chambre de turbulence,
et que pour générer un lit fluidisé on introduit un fluide de façon décentrée par un embout d'arrivée (6) dans le compartiment amortisseur et lui fait traverser, guidé du bas vers le haut, le média filtrant,
de sorte que les corps individuels composant le média entrent en turbulence et que ceci fluidifie le média,
et sachant que le fluide est guidé jusque dans le média sous forme d'un flux circulaire de sens montant,
sachant que le fluide circule par des orifices de passage (10) prévus dans le fond de séparation (9),
qui soit sont agencés de façon approximativement circulaire et sont de forme oblongue, leurs axes longitudinaux étant orientés approximativement de façon tangentielle,
soit présentent essentiellement un tracé concentrique par rapport au centre du fond de séparation (9).

10. Application du procédé selon la revendication 9 pour laver à contre-courant un filtre servant au retraitement de l'eau.
